# EUROPÄISCHE PATENTSCHRIFT

(11) **EP 3 325 413 B1**
(45) Veröffentlichungstag und Bekanntmachung des Hinweises auf die Patenterteilung: **22.05.2019**
(21) Anmeldenummer: 16750629.4
(22) Anmeldetag: 15.07.2016
(51) Int. Cl.: C02F 1/42, B60S 3/00, C02F 103/44

(54) **VERFAHREN ZUR VERHINDERUNG VON TROCKNUNGSFLECKEN UND FAHRZEUGWASCHANLAGE**
METHOD FOR PREVENTING MARKS CAUSED BY DRYING AND A VEHICLE WASHING SYSTEM
PROCÉDÉ POUR ÉVITER LA FORMATION DE TACHES DE SÉCHAGE ET INSTALLATION DE LAVAGE DE VÉHICULES

(30) Priorität: 17.07.2015 DE 102015111622
(43) Veröffentlichungstag der Anmeldung: 30.05.2018
(73) Patentinhaber: WashTec Holding GmbH, 86153 Augsburg (DE)
(72) Erfinder: SATTLER, Andreas, 81543 München (DE); MAYER, Stefan, 86356 Neusäß (DE); AUER, Robert, 86391 Stadtbergen (DE)
(74) Vertreter: Reitstötter Kinzebach
(86) Internationale Anmeldenummer: PCT/EP2016/066960
(87) Internationale Veröffentlichungsnummer: WO 2017/013035

(56) Entgegenhaltungen:
- GB-A- 1 121 751
- GB-A- 2 297 901
- US-A- 2 801 941
- US-A- 5 647 977
- US-A- 6 042 730

## Beschreibung

Die vorliegende Erfindung betrifft ein Reinigungsverfahren für Fahrzeuge, insbesondere PKW, nach dem Oberbegriff des Anspruchs 1, insbesondere ein Reinigungsverfahren, das einen Spülschritt umfasst, wobei die Bildung von sichtbaren Flecken, z.B. auf der Karosserieoberfläche, vermieden wird. Weiter betrifft die Erfindung eine Fahrzeugwaschanlage nach dem Oberbegriff des Anspruchs 9.

Spülen von Fahrzeugen wird entweder mit behandeltem oder unbehandeltem Wasser durchgeführt, oder aber mit einem Wasser-/Produktgemisch, insbesondere mit CTH-Zusatz (CTH - chemische Trocknungshilfe, welche die Oberfläche hydrophobiert), um tendenziell kleine Tropfen oder einen geschlossenen Wasserfilm zu großen Tropfen zu verwandeln, da diese über die Gebläseeinheit leicht vom Fahrzeug zu blasen sind.

Im Rahmen der Fahrzeugwäsche sind im Wesentlichen zwei Trocknungsverfahren üblich:
1) "Ablauftrocknung", bei der ein möglichst geschlossener Wasserfilm erzeugt wird, der selbständig nahezu vollständig abläuft. Grundlage ist die Hydrophilierung der Fahrzeugoberfläche durch Tenside oder andere Netzmittel. Dieses Verfahren ist insbesondere bei der Wäsche von Nutzfahrzeugen üblich.
2) "Gebläsetrocknung", bei der der geschlossene Wasserfilm in möglichst große Tropfen umgewandelt wird, welche anschließend über ein Gebläse vom Fahrzeug entfernt werden können. Grundlage ist die Hydrophobierung der Fahrzeugoberfläche durch geeignete Produkte, welche als CTH, Wachs oder Ähnliches bezeichnet werden.

Letztgenanntes Verfahren ist insbesondere bei PKW-Wäsche in Portalanlagen oder Waschstraßen üblich und deckt den Großteil des Marktes ab.

Zum Spülen der Oberfläche einer Karosserie wird im Allgemeinen relativ sauberes Wasser, in der Regel Frischwasser, eingesetzt. Es zeigt sich jedoch, dass aufgrund der im Frischwasser enthaltenen Calcium- und Magnesiumsalze, der so genannten Wasserhärte, nach dem Trocknen des Fahrzeugs auf dessen Oberfläche sichtbare Flecken verbleiben, die vor allem von den unlöslichen Carbonaten oder Sulfaten von Elementen der zweiten Hauptgruppe des Periodensystems herrühren. Diese unlöslichen Carbonate oder Sulfate sind insbesondere die Carbonate von Calcium und Magnesium sowie Calciumsulfat. Jene sind in Wasser besonders wenig löslich und fallen über dem Sättigungspunkt leicht als Belag z.B. an den Wänden von Wasserrohren aus. Derartige Salze bilden auch in der Natur in Wasser wenig lösliche Mineralien, z.B. Kalkstein (Calciumcarbonat), Bitterspat (Magnesiumcarbonat) und/oder Gips (Calciumsulfat). Aufgrund der geringen Löslichkeit verbleiben nach dem Gebrauch von Wasser mit Wasserhärte als Spülflüssigkeit am Ende des Verfahrens zur Reinigung von Fahrzeugen, z.B. nach einer Gebläsetrocknung, weißliche Kalk- oder Gipsflecken bzw. deren äquivalente schwerlösliche Magnesiumsalze auf der Karosserieoberfläche zurück. Diese Flecken erscheinen erst nach Eintrocknen des durch die Gebläsetrocknung nicht entfernten Restwassers. Diese Flecken sind auf Hochglanzlack, insbesondere bei dunkelfarbigen Lacken oder Glas besonders auffällig und können vom Kunden einer Waschanlage als Qualitätsmangel beanstandet werden. Außerdem besitzen solche Ablagerungen auch eine gewisse Fangwirkung für weiteren Schmutz, wodurch Folgeprobleme zu erwarten sind.

Um dieses Problem zu lösen, wird im Stand der Technik vorgeschlagen, entsalztes bzw. desionisiertes Wasser einzusetzen, welches keine Trocknungsflecken hinterlässt.

Zur Anwendung kommen auch Systeme, bei denen das Wasser zunächst mit einem Kationenaustauscher im Wesentlichen enthärtet wird und anschließend mit einer OsmoseVorrichtung behandelt wird.

Die Vollentsalzung des Wassers kann Nachteile bei der Kombination mit anderen Schritten des kompletten Reinigungsverfahrens aufweisen. Ebenso ist die Verwendung von Netzmitteln, z.B. aus Umweltgründen, nicht immer vorteilhaft. Das Osmose-Verfahren liefert vollentsalztes Wasser hoher Qualität bei einem relativ hohen Aufwand, wobei das Vorschalten eines Kationenaustauschers ein Erfordernis ist.

Die US 6 042 730 A beschreibt eine Fahrzeugwaschanlage mit einer lonenaustauschvorrichtung, welche einen Anionenaustauscher verwendet. Dabei ist die Anionenaustauschbehandlung auf die Entfernung von Seifen gerichtet. Hierzu wird ein mit Sulfationen beladener Anionenaustauscher vorgeschlagen.

Ferner beschreiben die US 5 647 977 A, die US 2 801 941 A, die in GB 2 297 901 A und die GB 1 121 751 A Waschanlagen, die neben einem Anionenaustausch stets auch einen Kationenaustausch vorsehen.

Die vorliegende Erfindung hat sich zur Aufgabe gesetzt, ein Reinigungsverfahren bereitzustellen, bei dem der Spülschritt gegenüber dem Stand der Technik, kostengünstiger, effektiver und gleichzeitig flexibler erfolgt und ein besseres Spülergebnis erzielt wird, welches eine Gebläsetrocknung der Oberfläche vorteilhafter vorbereitet.

Es wurde nun überraschenderweise gefunden, dass die gezielte Entfernung von mit in Wasser gelösten Erdalkalimetallen schwerlösliche Salze bildenden Anionen, wie Carbonat oder Sulfat, zu einer Spülflüssigkeit führt, die nach der Gebläsetrocknung auf der Oberfläche eines gereinigten Fahrzeugs keine sichtbaren Flecken von in Wasser schwer löslichen Salzen, wie Gips oder Kalk, hinterlässt.

Gelöst wird die Aufgabe durch ein Verfahren zur Reinigung von Fahrzeugen mit den Merkmalen des Anspruchs 1 sowie eine Fahrzeugwaschanlage mit den Merkmalen des Anspruchs 9. Vorteilhafte Weiterbildungen und Ausgestaltungen der Erfindung sind in den Unteransprüchen angegeben.

Erfindungsgemäß umfasst das Verfahren einen Spülschritt mit einer Spülflüssigkeit, insbesondere Wasser, wobei das eingesetzte Wasser eine Wasserhärte aufweist, und wobei mit in Wasser gelösten Erdalkalimetallen schwerlösliche Salze bildende Anionen dem Wasser entzogen werden, während die Wasserhärte verursachenden Kationen belassen werden. Die mit in Wasser gelösten Erdalkalimetallen schwerlösliche Salze bildende Anionen werden dem Wasser selbstverständlich vor dem Spülschritt entzogen. Als schwerlösliche Salze werden vorliegend insbesondere solche mit einer Löslichkeit in Wasser bei 20°C und 1013 mbar von höchstens 10 g/l, insbesondere höchstens 1 g/l betrachtet.

Erfindungsgemäß werden die mit in Wasser gelösten Erdalkalimetallen schwerlösliche Salze bildenden Anionen gegen Anionen ausgetauscht, welche mit Erdalkali-Ionen leicht lösliche Salze bilden, insbesondere gegen Chloridionen. Die mit in Wasser gelösten Erdalkalimetallen schwerlösliche Salze bildenden Anionen sind in der Regel unter Carbonat, Hydrogencarbonat und Sulfat ausgewählt. Erdalkalimetallhydrogencarbonate sind an sich nicht schwerlöslich, werden aber unter Wärmeeinwirkung, wie sie beispielsweise beim Gebläsetrocknen auftritt, in die schwerlöslichen Carbonaten umgewandelt; Hydrogencarbonate werden daher im Rahmen der vorliegenden Erfindung zu den Anionen gerechnet werden, die mit Erdalkalimetallkationen schwerlösliche Salze bilden.

"Eine Wasserhärte aufweisen" bedeutet, dass das eingesetzte Wasser Erdalkalimetallkationen, insbesondere Calcium- und/oder Magnesiumionen, enthält. Die Menge an Erdalkalimetallkationen hängt von den örtlichen Gegebenheiten ab. Die Gesamtmenge an Calcium- und Magnesiumionen beträgt in der Regel wenigstens 0,05 mmol/l, bevorzugt wenigstens 0,1 mmol/l, stärker bevorzugt wenigstens 1 mmol/l, insbesondere wenigstens 1,3 mmol/l. Die Gesamtmenge an Calcium- und Magnesiumionen kann bis zu 10 mmol/l betragen; sie beträgt im Allgemeinen 1,3 bis 6 mmol/l.

Die Wasserhärte verursachenden Kationen werden im erfindungsgemäßen Verfahren belassen. Dies bedeutet, dass keine Schritte unternommen werden, um die Wasserhärte verursachenden Kationen zu entfernen. Dennoch kann es während des Entfernens der Anionen zu kleinen Verlusten an solchen Kationen kommen, beispielsweise durch Adsorptionseffekte. Diese Verluste betragen in der Regel höchstens 5 Gew.-%, bevorzugt höchstens 2 Gew.-%.

Dabei können die mit in Wasser gelösten Erdalkalimetallen schwerlösliche Salze bildenden die Wasserhärte verursachenden Anionen mit einem stark basischen Anionenaustauscher entfernt werden. Der stark basische Anionenaustauscher ist geeigneterweise mit Anionen vorbelegt, welche mit Erdalkali-Ionen leicht lösliche Salze bilden, insbesondere mit Chloridionen. Die Vorbelegung erfolgt im Allgemeinen durch Aktivierung der handelsüblichen Hydroxyl-Form des Anionenaustauschers mit einer wässrigen Alkalichloridlösung, insbesondere mit einer Natriumchlorid enthaltenden Lösung. Weiter können vorteilhaft die mit in Wasser gelösten Erdalkalimetallen schwerlösliche Salze bildenden die Wasserhärte verursachenden Anionen zu mindestens 30% entfernt werden. Ist der Anionenaustauscher erschöpft, kann er bevorzugt mit einer Natriumchlorid enthaltenden Lösung regeneriert werden. Es ist zweckmäßig, zwei oder mehrere lonenaustauschvorrichtungen im Parallelbetrieb vorzusehen, wobei eine lonenaustauschvorrichtung in Betrieb ist und die anderen regeneriert werden oder sich in Wartestellung befinden. Bei Erschöpfung einer lonenaustauschvorrichtung wird auf eine andere Vorrichtung umgeschaltet und die erschöpfte lonenaustauschvorrichtung kann regeneriert werden. In einer vorteilhaften Ausführung kann als Wasser Frischwasser eingesetzt werden.

Eine eingangs genannte Fahrzeugwaschanlage ist erfindungsgemäß dadurch gekennzeichnet, dass eine lonenaustauschvorrichtung zum Entzug von Anionen aus der Spülflüssigkeit vor dem Auftrag auf das Fahrzeug vorgesehen ist. Bevorzugt können die entzogenen Anionen ausgetauscht werden durch Anionen, welche mit Erdalkali-Ionen leicht lösliche Salze bilden.

Dabei ist die lonenaustauschvorrichtung erfindungsgemäß zum Entzug von mit in der Spülflüssigkeit gelösten Erdalkalimetallen schwerlösliche Salze bildenden Anionen aus der Spülflüssigkeit und Belassung der die Wasserhärte der Spülflüssigkeit verursachende Kationen eingerichtet, insbesondere zum Austausch der mit in Wasser gelösten Erdalkalimetallen schwerlösliche Salze bildenden Anionen gegen Chloridionen. Dabei werden die mit in Wasser gelösten Erdalkalimetallen schwerlösliche Salze bildenden Anionen gegen Anionen ausgetauscht, welche mit Erdalkali-Ionen leicht lösliche Salze bilden. Vorteilhaft kann die Spülflüssigkeit Wasser, insbesondere Frischwasser, enthalten oder sein. Weiter kann die Spülflüssigkeit bevorzugt ein chemisches Trocknungshilfsmittel enthalten.

In einer vorteilhaften Ausgestaltung kann die Auftragsvorrichtung eine Sprühvorrichtung zum Aufsprühen der Spülflüssigkeit auf das Fahrzeug umfassen. Die Sprühvorrichtung kann ein Sprühbogen mit an sich bekannten Sprühdüsen, aber auch ein Handsprühgerät wie eine Reinigungslanze sein.

Bevorzugt kann die Fahrzeugwaschanlage eine weitere Auftragsvorrichtung zum Applizieren einer Behandlungsflüssigkeit, insbesondere mit Reinigungsmittel, Pflegemitteln oder Polierwachs vermischtes Wasser, auf das Fahrzeug umfassen. Somit kann die erfindungsgemäße Aufbereitung gezielt nur für die Spülflüssigkeit erfolgen, wodurch der Einsatz der in der lonenaustauschvorrichtung enthaltenen Mittel verringert werden kann.

Um eine Einsparung an Frischwasser zu erzielen, kann die Behandlungsflüssigkeit durch eine Wasseraufbereitung aus bereits gebrauchter Behandlungs- und/oder Spülflüssigkeit aufbereitetes Brauchwasser enthalten.

Die Erfindung wird nachfolgend anhand von detaillierten Ausführungsbeispielen mit Bezug auf die begleitenden Zeichnungen beschrieben. Diese zeigen:
- **Fig. 1**: eine photographische Darstellung von Kalkflecken;
- **Fig. 2**: eine photographische Darstellung von "Calciumchlorid"-Flecken;
- **Fig. 3**: eine schematische Darstellung einer Portalwaschanlage, bei der das erfindungsgemäße Verfahren zum Einsatz kommt;
- **Fig. 4**: eine schematische Darstellung eines Abtrocknungsvorgangs über der Zeit mit a) behandelter Spülflüssigkeit und b) unbehandelter Spülflüssigkeit;
- **Fig. 5**: Masse-Zeit-Diagramme für einen Abtrocknungsvorgang mit a) behandelter Spülflüssigkeit und b) unbehandelter Spülflüssigkeit.

Das zum Spülen in einem Fahrzeugreinigungs-Verfahren verwendete Wasser ist in der Regel so genanntes Frischwasser. Frischwasser weist im Allgemeinen Trinkwasserqualität auf, dies ist aber nicht notwendig. Für den vorliegenden Zweck kann auch jedes qualitativ äquivalente Oberflächenwasser, z.B. klares Flusswasser, Regenwasser etc. eingesetzt werden, solange es erfindungsgemäß zubereitet werden kann. Das Ziel der erfindungsgemäßen Wasserbehandlung ist die Senkung der im Zusammenhang mit Kationen der zweiten Hauptgruppe des Periodensystems, insbesondere Magnesium und Calcium, schwerlöslichen Anionen. Es hat sich gezeigt, dass bei einer Beseitigung dieser Anionen in einem Ausmaß von mindestens 30%, bevorzugter 50%, besonders bevorzugt 60%, vor allem 70%, stärker bevorzugt 80%, idealerweise 90% und mehr, das Ergebnis der Spülung nach dem Trocken besonders befriedigend ist, d.h. es werden keine sichtbaren Trocknungsflecken mehr beobachtet. Das erreichte Ausmaß hängt von der jeweiligen Wasserhärte und der Kapazität einer lonenaustauschvorrichtung ab.

Trinkwasser kann je nach Standort verschiedene Zusammensetzungen aufweisen. Für das Münchner Trinkwasser werden beispielsweise Calciumwerte im Bereich von etwa 70 bis etwa 90 mg/l, Magnesiumwerte im Bereich von etwa 16 bis etwa 25 mg/l, Hydrogencarbonat-Werte im Bereich von etwa 224 bis etwa 380 mg/l, Kohlendioxid-Werte von etwa 6 bis etwa 32 mg/l und Carbonat-Werte von etwa 0,4 bis etwa 0,7 mg/l angegeben. Diese Werte können je nach Ortslage in Deutschland stark variieren.

Das erfindungsgemäße Verfahren ist gemeinhin auf alle Arten von Flächen anwendbar, welche gereinigt werden müssen und auf deren Oberfläche Flecken von durch Wasserhärte erzeugten Restsalzen auffällig sind. Insofern ist die Erfindung besonders für dunkel Hochglanz-lackierte Bleche, wie bei Fahrzeugen geeignet. Insbesondere ist das Verfahren für Fahrzeuge geeignet, die übliche Waschstraßen oder Portalwaschanlagen passieren können. Dies gilt besonders für PKW beliebiger Größe, Sportwagen, SUV, Van, Transporter, Wohnmobile oder Campingwagen.

Die Entfernung der Anionen kann auf unterschiedliche Weise erfolgen. Es bieten sich z.B. chemische Verfahren oder Sorptionsverfahren, insbesondere Adsorptionsverfahren, an. Bevorzugt sind Verfahren mit basischen Anionenaustauschern, vorzugsweise stark basischen Anionenaustauschern (SBA). Hierbei können auch die für die Vollentsalzung in Mischbetten eingesetzten Anionenaustauscher-Typen verwendet werden.

Die nachstehenden Schritte finden bei der Entfernung der unerwünschten Anionen A⁻ statt, wenn ein stark basischer Anionenaustauscher in der Chlorid-Form verwendet wird:
Aktivierungsschritt:

   Harz-N⁺(CH₃)₃OH⁻ + NaCl —> Harz-N⁺(CH₃)₃Cl⁻ + Na⁺OH⁻
Austauschschritt:

   Harz-N⁺(CH₃)₃Cl⁻ + A⁻ —> Harz-N⁺(CH₃)₃A⁻ + Cl⁻
Regenerierungsschritt:

   Harz-N⁺(CH₃)₃A⁻ + Na⁺Cl⁻— > Harz-N⁺(CH₃)₃Cl⁻ + Na⁺A⁻

Kohlenstoffdioxid liegt im Wasser gelöst vorwiegend als HCO₃⁻ vor (A⁻ = HCO₃⁻). Calciumhydrogencarbonat ist in Wasser löslich, wandelt sich aber beim Trocknen in das schwerlösliche Carbonat um, das dann den unlöslichen Kalkfleck bildet. Schwerlösliche Salze bildende Anionen sind auch SO₄²⁻-Anionen.

Als Anionenaustauscher eigenen sich im Allgemeinen beliebige basische, insbesondere stark basische Anionenaustauscher-Harze. Die Matrix des Harzes kann beliebig sein, wobei eine Acryl- oder Polystyrol-Basis bevorzugt ist. Die Modifizierung erfolgt in der Regel über aliphatische quaternäre seitenständige Gruppen. Das Harz besteht in der Regel aus kugelförmigen Perlen vom durchsichtigen Gel-Typ. Die Gesamt-Kapazität beträgt üblicherweise 0,9 bis 1,4 Äquiv. pro I, z.B. 1,3 Äquiv.pro I (28,4 kg/ft³) für die Chlorid-Form.

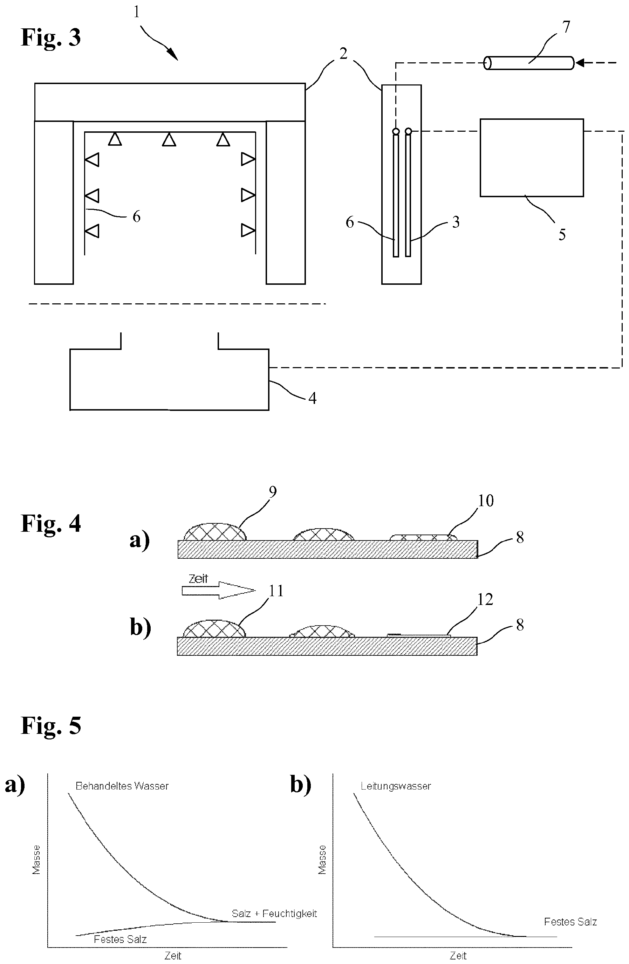

Das erfindungsgemäße Verfahren kann in beliebigen Fahrzeug-Reinigungs- und/oder Waschanlagen eingesetzt werden. Beispielhaft ist in Fig. 3 schematisch eine an sich bekannte Portalwaschanlage 1 in Frontalansicht (links) und entsprechender Seitenansicht (rechts) dargestellt.

Die Portalwaschanlage 1 weist dabei ein in Längsrichtung verfahrbares Waschportal 2 mit einer daran angeordneten ersten Sprühvorrichtung 3 für das Aufbringen von Reinigungsflüssigkeit zum Reinigen des Fahrzeugs aufgebracht werden.

Hierzu wird die bereits gebrauchte Waschflüssigkeit in einem Schlammtank 4 unter dem Waschbereich gesammelt und dann mit einer Wasseraufbereitung 5 als Brauchwasser wiederaufbereitet. Anschließend wird das Brauchwasser wieder mit den Reinigungsmitteln wie Schaum, Schampoo etc. gemischt und erneut der ersten Sprühvorrichtung 3 zugeführt.

Weiter weist das Waschportal 2 eine daran angeordnete zweite Sprühvorrichtung 6 für das Aufbringen von erfindungsgemäß behandeltem Wasser zum Spülen des Fahrzeugs auf. Hierzu wird Frischwasser in einer lonenaustauschvorrichtung 7 erfindungsgemäß behandelt.

So wird in einem Schritt innerhalb des gesamten Verfahrens mit aufbereitetem Brauchwasser das Fahrzeug gereinigt und in einem weiteren Schritt das Fahrzeug vom Restschmutz sauber gespült, wobei vorteilhaft in dem letzten Schritt das erfindungsgemäß behandelte Frischwasser eingesetzt wird. Mit dem erfindungsgemäß behandelten Frischwasser oder bevorzugt davor kann eine chemische Trocknungshilfe (CTH) aufgetragen werden. Solche Hilfen umfassen z.B. organische und/oder siliziumorganische Amino/Hydroxy-Alkoxy-Verbindungen und/oder Alkoxyalkohole. Anschließend wird in einem weiteren Schritt mit einem nicht gezeigten Gebläse getrocknet.

Es sei angemerkt, dass ein an sich bekannter CTH-Auftrag mit Osmose-Wasser im Vergleich zum hier beschriebenen erfindungsgemäßen Verfahren mit einem merklichen PerformanceEinbruch verbunden ist, der bei erfindungsgemäß behandeltem Wasser nicht auftritt.

Hinsichtlich des erfindungsgemäßen Verfahrens ergibt sich gegenüber den bekannten Verfahren eine Vielzahl von Vorteilen. Zunächst ist hervorzuheben, dass eine lonenaustauschvorrichtung üblicher Art, wie sie bereits vielfach in Waschanlagen eingesetzt wird, verwendet werden kann, mit der Abwandlung, dass anstatt des Kationenaustauschers nun ein Anionenaustauscher zum Einsatz kommt. Damit kann die Erfindung ohne wesentliche Modifizierung in bestehenden Systemen eingesetzt werden.

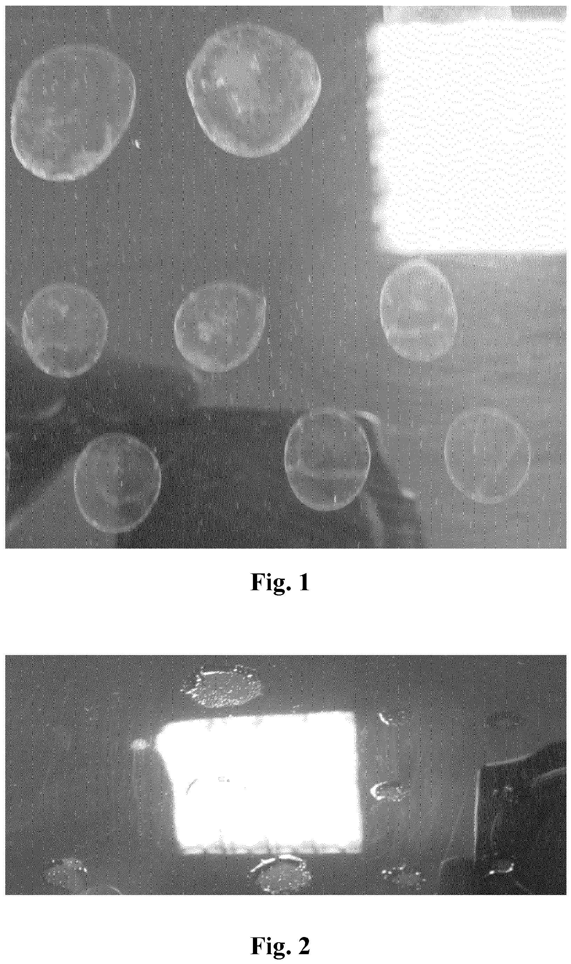

Die günstige Wirkung der Erfindung beruht vermutlich darauf, dass anstatt unlösliche kreidige Kalk- oder Gipsflecken auf der Fahrzeugoberfläche zu hinterlassen, die Calcium-oder Magnesiumsalze nun je nach Entfernungs-Ausmaß höchstens als gut wasserlösliche und hygroskopische Ablagerung, z.B. CaCl₂ oder MgCl₂, auf der Oberfläche des Fahrzeugs vorliegen. Solche Ablagerungen ziehen überdies Wasser an, sodass der Film möglicher Flecken nicht mehr sichtbar ist. Fig. 2 zeigt deutlich das durchsichtige Erscheinungsbild der Flecken, hervorgerufen durch das hygroskopische Verhalten der Calcium- und Magnesiumchloride. Durch das Wasser kann auch ein Teil unlöslicher Salze feucht und damit nicht sichtbar gehalten werden. Die Flecken können dann zudem in Folge, z.B. bei Regen, vollends verschwinden. Kalk- oder Gipsflecken verbleiben dagegen und sind im trockenen Zustand weiterhin sichtbar, vgl. Fig. 1, die deutlich abgesetzte Flecken darstellt, welche ein weißes auffälliges Erscheinungsbild aufweisen.

Dies wird anhand der schematischen Darstellung eines Abtrocknungsvorgangs über derZeit in Fig. 4 und von Masse-Zeit-Diagrammen in Fig. 5 mit behandelter Spülflüssigkeit (Fig. 4a, 5a) und unbehandelter Spülflüssigkeit (Fig. 4b, 5b) nochmals veranschaulicht.

So zeigt Fig. 4 a) von links nach rechts über der Zeit einen erfindungsgemäßen Abtrocknungsvorgang. Dabei verbleibt auf einer zu reinigenden Fahrzeugoberfläche 8 nach dem Abspülen, und üblicherweise selbst nach intensiver Gebläsetrocknung, Restwasser der Spülflüssigkeit mit dem erfindungsgemäß behandelten Wasser, dargestellt durch den Tropfen 9. Das im Tropfen 9 enthaltene Wasser verdunstet dann, wobei aufgrund der Eigenschaften des erfindungsgemäß behandelten Wassers keine vollständige Trocknung erfolgt, sondern ein "Resttropfen" 10 mit Restfeuchtigkeit wie oben beschrieben verbleibt. Dies ist auch in Fig. 5 a) erkennbar, wo ein gewisser Anteil Feuchtigkeit erhalten bleibt.

Im Gegensatz dazu ist in Fig. 4 b) erkennbar, dass der dort nach dem Spülvorgang verbleibende Tropfen 11 der Spülflüssigkeit mit unbehandeltem Wasser über die Zeit vollständig abgetrocknet und somit ein deutlich erkennbarer Trocknungsfleck 12 mit scharf abgegrenzten Rändern verbleibt, wie auch in Fig. 1 gezeigt. Auch Fig. 5 b) ist zu entnehmen, dass der Tropfen 11 vollständig abtrocknet und somit nur noch der gut sichtbare Trocknungsfleck 12 auf der Fahrzeugoberfläche 8 verbleibt.

Ein weiterer Vorteil besteht darin, dass die Regenerierung nur für den Anionenaustauscher auszuführen ist, d.h. es werden Regenerierungschemikalien gespart. Zudem ist die Regenerierung des Anionenaustauschers mit dem physiologisch und umwelttechnisch weitgehend unproblematischen Natriumchlorid vorteilhaft. Es sind keine Gefahrstoffe vonnöten. Ebenso kann auf Tenside oder andere die Umwelt belastende Chemikalien verzichtet werden.

Gegenüber Verfahren mit einer Osmose-Membran-Entsalzung hat das Verfahren den Vorteil, dass ein Ausfall des lonentauschers (zum Beispiel durch versäumte Regeneration) keinen Schaden an der Anlage hervorruft. Während die Osmosemembran bei Ausfall der Enthärtung durch Verblockung mit z.B. Kalk, Gips usw. dauerhaft geschädigt wird. Ein solches Ereignis hat im erfindungsgemäßen Verfahren keine wesentliche Auswirkung, weil durch Regeneration der lonenaustauschvorrichtung die Funktionsfähigkeit schnell wieder hergestellt werden kann. Vorzugsweise umfasst das erfindungsgemäße Verfahren weder einen (Umkehr)Osmoseschritt noch ein destillatives Entfernen der Salze.

Die Affinität verschiedener Ionen zum lonenaustauscherharz variiert, so dass die Qualität des lonenaustausches abhängig von der Anzahl und Art der im Wasser gelösten Ionen und somit standortabhängig ist. Um die gewünschte Austauscheffizienz auch bei Vorhandensein von vielen Ionen mit niedriger Affinität zu erreichen, ist es ggf. erforderlich, den Austauscher überzudimensionieren. Dieser ist in diesem Fall nicht bis zu seiner Nennkapazität betreibbar, weil die Ionen niedriger Affinität, z.B. HCO₃⁻ Ionen, welche möglichst gründlich entfernt werden sollten, dann bereits durchbrechen.

Der Grad der Entfernung der Carbonat- oder Sulfationen kann daher in einfacher Weise über die lonenaustauschkapazität und die Länge der eingesetzten lonenaustauschvorrichtung reguliert werden. Eine Überwachung des Verbrauchs der lonenaustauschvorrichtung kann über den Volumenstrom in Kenntnis der aktuellen Wasserhärte erfolgen. Eine empirische Skale, die Härtegrade mit den Parametern des eingesetzten Ionenaustauschers korreliert, kann verwendet werden, um den ungefähren Zeitpunkt zur Regeneration der lonenaustauschvorrichtung zu ermitteln.

Die Wirkung des erfindungsgemäßen Verfahrens kann auch vorteilhaft durch einen Test geprüft werden. Dabei wird das aktuelle Spülwasser auf ein Hochglanz-lackiertes Blech getropft und im Luftstrom trocknen lassen. Ist der Ionenaustauscher funktionstüchtig, sind keine weißen oder hellen Flecken in einem Abstand von 1 m mit dem bloßen Auge erkennbar. Andernfalls ist der Ionenaustauscher aufgebraucht und muss regeneriert werden. Gegebenenfalls kann auch der pH-Wert oder ein anderer chemischer oder physikalischer Parameter kontrolliert werden.

Bei der Ausführung des Verfahrens kann der übliche Leitungsdruck verwendet werden. Die bei einer Osmosevorrichtung zwingend erforderliche Druckerhöhung vor der Osmosemembran ist nicht nötig. Die Ionenaustauschvorrichtung und die Sprühvorrichtung können grundsätzlich mit dem gleichen Druck beaufschlagt werden.

Der Volumenstrom der lonenaustauschvorrichtung ist für alle gängigen Anwendungen ausreichend. Eine Zwischenspeicherung der behandelten Spülflüssigkeit ist nicht notwendig. Der Volumenstrom wird so eingestellt, dass das vorgesehene Reinigungsziel erreicht wird.

Der erfindungsgemäße Spülschritt kann ohne deutliche Änderung der wesentlichen Parameter in ein bestehendes Reinigungsverfahren für Fahrzeuge integriert werden. Weiterhin können vorteilhafte Varianten von Reinigungsverfahren entworfen werden. Zum Beispiel kann eine chemische Trocknungshilfe dem erfindungsgemäß behandeltem Spülwasser beigefügt werden. Im üblichen Verfahren, insbesondere solchem unter Einsatz von Osmosemembranen, wäre hierfür ein separater Schritt erforderlich.

### Bezugszeichenliste

- 1: Portalwaschanlage
- 2: Waschportal
- 3: erste Sprühvorrichtung (Brauchwasser)
- 4: Schlammtank
- 5: Wasseraufbereitung
- 6: zweite Sprühvorrichtung (Frischwasser)
- 7: lonenaustauschvorrichtung
- 8: Fahrzeugoberfläche
- 9: Tropfen erfindungsgemäß behandelter Spülflüssigkeit
- 10: Resttropfen behandelter Spülflüssigkeit
- 11: Tropfen unbehandelter Spülflüssigkeit
- 12: Trocknungsflecken

## Patentansprüche

1. Verfahren zur Reinigung von Fahrzeugen, umfassend einen Spülschritt mit Wasser, wobei das eingesetzte Wasser eine Wasserhärte aufweist, **dadurch gekennzeichnet, dass** die mit in Wasser gelösten Erdalkalimetallen schwerlösliche Salze bildenden Anionen dem Wasser entzogen werden, während die Wasserhärte verursachende Kationen belassen werden, wobei die mit in Wasser gelösten Erdalkalimetallen schwerlösliche Salze bildenden Anionen gegen Anionen ausgetauscht werden, welche mit Erdalkali-Ionen leicht lösliche Salze bilden.

2. Verfahren nach Anspruch 1, wobei die mit in Wasser gelösten Erdalkalimetallen schwerlösliche Salze bildenden Anionen gegen Chloridionen ausgetauscht werden.

3. Verfahren nach einem der vorhergehenden Ansprüche, wobei die mit in Wasser gelösten Erdalkalimetallen schwerlösliche Salze bildenden Anionen mit einem stark basischen Anionenaustauscher entfernt werden.

4. Verfahren nach Anspruch 3, wobei der stark basische Anionenaustauscher mit Anionen vorbelegt ist, welche mit Erdalkali-Ionen leicht lösliche Salze bilden.

5. Verfahren nach einem der Ansprüche 1 bis 4, wobei die mit in Wasser gelösten Erdalkalimetallen schwerlösliche Salze bildenden Anionen zu mindestens 30% entfernt werden.

6. Verfahren nach einem der Ansprüche 3 bis 5, wobei der Anionenaustauscher mit einer Natriumchlorid enthaltenden Lösung regeneriert wird.

7. Verfahren nach einem der vorhergehenden Ansprüche, wobei die mit in Wasser gelösten Erdalkalimetallen schwerlösliche Salze bildenden Anionen unter Carbonat, Hydrogencarbonat und Sulfat ausgewählt sind.

8. Verfahren nach einem der vorangehenden Ansprüche, wobei als Wasser Frischwasser eingesetzt wird.

9. Fahrzeugwaschanlage (1) mit mindestens einer Auftragsvorrichtung (6) zum Applizieren von Spülflüssigkeit auf ein zu reinigendes Fahrzeug, **dadurch gekennzeichnet, dass** eine lonenaustauschvorrichtung (7) zum Entzug von Anionen aus der Spülflüssigkeit vor dem Auftrag auf das Fahrzeug vorgesehen ist, wobei die lonenaustauschvorrichtung (7) zum Entzug von mit in der Spülflüssigkeit gelösten Erdalkalimetallen schwerlösliche Salze bildenden Anionen aus der Spülflüssigkeit und Belassung der die Wasserhärte der Spülflüssigkeit verursachende Kationen eingerichtet ist, wobei die mit in Wasser gelösten Erdalkalimetallen schwerlösliche Salze bildenden Anionen gegen Anionen ausgetauscht werden, welche mit Erdalkali-Ionen leicht lösliche Salze bilden.

10. Fahrzeugwaschanlage nach Anspruch 9, **dadurch gekennzeichnet, dass** die lonenaustauschvorrichtung (7) zum Austausch der mit in Wasser gelösten Erdalkalimetallen schwerlösliche Salze bildenden Anionen gegen Chloridionen eingerichtet ist.

11. Fahrzeugwaschanlage (1) nacheinem der Ansprüche 9 oder 10, **dadurch gekennzeichnet, dass** die Spülflüssigkeit Wasser, insbesondere Frischwasser enthält.

12. Fahrzeugwaschanlage (1) nach einem der Ansprüche 9 bis 11, **dadurch gekennzeichnet, dass** die Spülflüssigkeit ein chemisches Trocknungshilfsmittel (CTH) enthält.

13. Fahrzeugwaschanlage (1) nach einem der Ansprüche 9 bis 12, **dadurch gekennzeichnet, dass** die Auftragsvorrichtung eine Sprühvorrichtung (6) zum Aufsprühen der Spülflüssigkeit auf das Fahrzeug umfasst.

14. Fahrzeugwaschanlage (1) nach einem der Ansprüche 9 bis 13, **dadurch gekennzeichnet, dass** die Fahrzeugwaschanlage (1) eine weitere Auftragsvorrichtung (3) zum Applizieren einer weiteren Behandlungsflüssigkeit, insbesondere mit Reinigungsmittel, Pflegemitteln oder Polierwachs vermischtes Wasser, auf das Fahrzeug umfasst.

15. Fahrzeugwaschanlage (1) nach Anspruch 14, **dadurch gekennzeichnet, dass** die Behandlungsflüssigkeit durch eine Wasseraufbereitung (5) aus bereits gebrauchter Behandlungs- und/oder Spülflüssigkeit aufbereitetes Brauchwasser enthält.

## Claims

1. Method for cleaning of vehicles, comprising a rinsing step with water, wherein the employed water has a water hardness, **characterized in that** the anions forming poorly soluble salts with alkaline earth metals dissolved in water are removed from the water, while the cations causing the water hardness are retained, wherein the anions forming poorly soluble salts with alkaline earth metals dissolved in water are exchanged with anions that form readily soluble salts with alkaline earth ions.

2. Method according to claim 1, wherein the anions forming poorly soluble salts with alkaline earth metals dissolved in water are exchanged with chloride ions.

3. Method according to one of the preceding claims, wherein the anions forming poorly soluble salts with alkaline earth metals dissolved in water are removed with a strongly basic anion exchanger.

4. Method according to claim 3, wherein the strongly basic anion exchanger is preloaded with anions that form readily soluble salts with alkaline earth ions.

5. Method according to one of the claims 1 to 4, wherein the anions forming poorly soluble salts with alkaline earth metals dissolved in water are at least 30% removed.

6. Method according to one of the claims 3 to 5, wherein the anion exchanger is regenerated with a solution containing sodium chloride.

7. Method according to one of the preceding claims, wherein the anions forming poorly soluble salts with alkaline earth metals dissolved in water are chosen among carbonate, hydrogen carbonate and sulfate.

8. Method according to one of the preceding claims, wherein fresh water is used as water.

9. Vehicle washing system (1) with at least one application device (6) to apply rinsing fluid to a vehicle being cleaned, **characterized in that** an ion exchange device (7) is provided to remove anions from the rinsing fluid before application to the vehicle, wherein the ion exchange device (7) is set up to remove anions forming poorly soluble salts with alkaline earth metals dissolved in the rinsing fluid from the rinsing fluid and to retain the cations that cause the water hardness of the rinsing fluid, wherein the anions forming poorly soluble salts with alkaline earth metals dissolved in water are exchanged with anions forming readily soluble salts with alkaline earth ions.

10. Vehicle washing system (1) according to claim 9, **characterized in that** the ion exchange device (7) is set up to exchange anions forming poorly soluble salts with alkaline earth metals dissolved in water with chloride ions.

11. Vehicle washing system (1) according to one of the claims 9 or 10, **characterized in that** the rinsing fluid contains water, especially fresh water.

12. Vehicle washing system (1) according to one of the claims 9 to 11, **characterized in that** the rinsing fluid contains a chemical drying aid (CDA).

13. Vehicle washing system (1) according to one of the claims 9 to 12, **characterized in that** the application device includes a spray device (6) to spray the rinsing fluid onto the vehicle.

14. Vehicle washing system (1) according to one of the claims 9 to 13, **characterized in that** the vehicle washing system (1) includes an additional application device (3) to apply an additional treatment fluid to the vehicle, especially water mixed with detergents, care agents or polishing wax.

15. Vehicle washing system (1) according to claim 14, **characterized in that** the treatment fluid contains service water treated by a water treatment (5) from already consumed treatment and/or rinsing fluid.

## Revendications

1. Procédé pour le nettoyage de véhicules, comprenant une étape de rinçage à l'eau, l'eau utilisée présentant une dureté d'eau, **caractérisé en ce que** les anions formant des sels peu solubles avec les métaux alcalino-terreux dissous dans l'eau sont retirés de l'eau alors que les cations provoquant la dureté de l'eau y sont laissés, les anions formant des sels peu solubles avec les métaux alcalino-terreux dissous dans l'eau étant échangés contre des anions qui forment des sels solubles avec les ions alcalino-terreux.

2. Procédé selon la revendication 1, les anions formant des sels peu solubles avec les métaux alcalino-terreux dissous dans l'eau étant échangés contre des ions chlorure.

3. Procédé selon l'une quelconque des revendications précédentes, les anions formant des sels peu solubles avec les métaux alcalino-terreux dissous dans l'eau étant éliminés par un échangeur d'anions fortement basique.

4. Procédé selon la revendication 3, l'échangeur d'anions fortement basique étant chargé au préalable par des anions qui forment des sels solubles avec les ions alcalino-terreux.

5. Procédé selon l'une quelconque des revendications 1 à 4, les anions formant des sels peu solubles avec les métaux alcalino-terreux dissous dans l'eau étant éliminés à raison d'au moins 30%.

6. Procédé selon l'une quelconque des revendications 3 à 5, l'échangeur d'anions étant régénéré par une solution contenant du chlorure de sodium.

7. Procédé selon l'une quelconque des revendications précédentes, les anions formant des sels peu solubles avec les métaux alcalino-terreux dissous dans l'eau étant choisis parmi le carbonate, l'hydrogénocarbonate et le sulfate.

8. Procédé selon l'une quelconque des revendications précédentes, de l'eau douce étant utilisée comme eau.

9. Installation (1) de lavage de véhicules présentant au moins un dispositif d'application (6) pour l'application de liquide de rinçage sur un véhicule à nettoyer, **caractérisée en ce qu'**elle présente un dispositif (7) d'échange d'ions pour éliminer des anions du liquide de rinçage avant l'application sur le véhicule, le dispositif (7) d'échange d'ions étant conçu pour éliminer les anions formant des sels peu solubles avec les métaux alcalino-terreux dissous dans le liquide de rinçage et pour y laisser les cations provoquant la dureté de l'eau du liquide de rinçage, les anions formant des sels peu solubles avec les métaux alcalino-terreux dissous dans l'eau étant échangés contre des anions qui forment des sels solubles avec les ions alcalino-terreux.

10. Installation de lavage de véhicules selon la revendication 9, **caractérisée en ce que** le dispositif (7) d'échange d'ions est conçu pour l'échange des anions formant des sels peu solubles avec les métaux alcalino-terreux dissous dans l'eau contre des ions chlorure.

11. Installation (1) de lavage de véhicules selon la revendication 9 ou 10, **caractérisée en ce que** le liquide de lavage contient de l'eau, en particulier de l'eau douce.

12. Installation (1) de lavage de véhicules selon l'une quelconque des revendications 9 à 11, **caractérisée en ce que** le liquide de rinçage contient un adjuvant de séchage chimique (CTH).

13. Installation (1) de lavage de véhicules selon l'une quelconque des revendications 9 à 12, **caractérisée en ce que** le dispositif d'application comprend un dispositif de pulvérisation (6) pour pulvériser le liquide de rinçage sur le véhicule.

14. Installation (1) de lavage de véhicules selon l'une quelconque des revendications 9 à 13, **caractérisée en ce que** l'installation (1) de lavage de véhicules comprend un autre dispositif d'application (3) pour appliquer un autre liquide de traitement, en particulier de l'eau mélangée à un agent de nettoyage, à des agents de soin ou à une cire de polissage, sur le véhicule.

15. Installation (1) de lavage de véhicules selon la revendication 14, **caractérisée en ce que** le liquide de traitement contient des eaux usées provenant de liquide de traitement et/ou de rinçage déjà utilisé, traitées par un traitement des eaux (5).
